# EUROPEAN PATENT SPECIFICATION

(11) **EP 1 301 058 B1**
(45) Date of publication and mention of the grant of the patent: **11.05.2005**
(21) Application number: 02102382.5
(22) Date of filing: 25.09.2002
(51) Int. Cl.: H04Q 7/38

(54) **Offering location-based services to a subscriber**
Bereitstellung von standortabhängigen Diensten für einen Teilnehmer
Offre de services localisés à un abonné

(30) Priority: 05.10.2001 FI 20011948
(43) Date of publication of application: 09.04.2003
(73) Proprietor: Alma Media OYJ, 00130 Helsinki (FI)
(72) Inventor: Turpeinen, Marko, 02360, Espoo (FI)
(74) Representative: Holmström, Stefan Mikael

(56) References cited:
- WO-A-01/72078
- US-A- 5 678 194
- US-A- 6 104 931
- US-A1- 2001 036 224
- LEONHARDT U ET AL: "Towards a general location service for mobile environments" SERVICES IN DISTRIBUTED AND NETWORKED ENVIRONMENTS, 1996., PROCEEDINGS OF THIRD INTERNATIONAL WORKSHOP ON MACAU 3-4 JUNE 1996, LOS ALAMITOS, CA, USA,IEEE COMPUT. SOC, US, 3 June 1996 (1996-06-03), pages 43-50, XP010165525 ISBN: 0-8186-7499-7

## Description

### FIELD OF THE INVENTION

The present invention relates to offering location-based services in a telecommunication network, particularly in a mobile network. In the following, the invention will be described by way of example mainly with reference to a mobile system.

### BACKGROUND OF THE INVENTION

Mobile systems have developed and continue to develop in a direction enabling the system to monitor the mobility of the subscribers in the system. This allows different location-based services to be offered to the subscribers. An example of a potential service is a weather forecast covering the area where the subscriber is located at that particular moment. However, the ability to monitor the movement of a given subscriber creates problems. The subscriber is unlikely to be willing to allow just anyone to monitor his movements. Accordingly, the need has arisen to provide a solution allowing the subscribers of a mobile system to be provided with location-based services without compromising their privacy. The object of the present invention is thus to provide a solution for providing a subscriber with location-based services without the subscriber's location and movements becoming public information and thus compromising the subscriber's privacy.

Prior art solutions for producing location based services to subscribers are disclosed, for instance, in US-A-6 104 931, WO-A-0172078 and US-2001/0036224. Attempts have been made in these solutions to ensure that there are restrictions regarding the possibilities to determine the location of a subscriber. However, despite these attempts a sufficient level of privacy is not achieved with these solutions.

### SUMMARY OF THE INVENTION

The object of the invention is achieved by a method of providing a subscriber with content that is dependent on the subscriber's location data. The method of the invention is characterized by: retrieving a subscriber credential from a service provider for enabling the retrieval of the subscriber's location data from a location data source, retrieving the subscriber's location data from the location data source by utilizing the credential, producing a location-based content at the content provider by utilizing the location data, and transmitting the content to the subscriber via a telecommunication system.

The invention also relates to a telecommunication system comprising: subscribers, a location data source for maintaining location data descriptive of the subscribers' location, and a service provider for providing the subscribers with subscriber location data-dependent content. The telecommunication system of the invention is characterized in that the location data source is configured to transmit further a given subscriber's location data only upon reception of a location data inquiry including a validated credential, and that the system further includes: a service provider, from which a given subscriber's credential is retrievable for providing said subscriber with a location-based content, and means for transmitting a location data inquiry including the credential of the subscriber requesting for the content to the location data source, for transferring the location data transmitted from the location data source to the content provider, and for transferring the content provided by the content provider further to the subscriber.

The invention further relates to a location data source including means for maintaining and forwarding subscriber location data. The location data source of the invention is characterized in that the location data source is configured to transmit further a given subscriber's location data only when the location data source has received a location data inquiry including a validated credential.

The invention is based on the idea of offering location-based services to a subscriber without compromising the subscriber's privacy by taking into use a special location data source that releases location data descriptive of a given subscriber's location only if the subscriber-specific credential received by the location data source indicates that releasing the location data is allowed. In other words, not anyone is able to find out a given subscriber's location by means of the location data source, only a party having the subscriber's credential at its disposal. This offers the subscriber a chance to determine who is able to find out his location based on the data at the location data source. By releasing his credential only to such reliable parties he believes will maintain and use the credential appropriately, the subscriber is able to ensure that not just anyone is able to monitor the subscriber's movements.

The concept credential is to be understood broadly in this context. At its simplest, if the credential includes a password, the location data source is able to use verification data to verify the password. An asymmetric cryptographic method may also be used instead of a password, and in that case, the subscriber's credential includes data produced by the subscriber's secret key. In this case, the verification data of the location data source include the subscriber's public key, which enables the location data source to verify that it is allowable to transmit the location data. The credential may also be verified based on an asymmetric cryptographic solution, where the attributes relating to an individual can be validated without the identity of the individual being revealed. Such a solution based on 'Private Credentials' requires a reliable party, i.e. a 'Certificate Authority', for the creation of the credential and for issuing the client's credential, and, in addition, a credential verifier is required, which in the solution of the invention is composed of the location data source. An individual subscriber's credential may include multiple parts, only a given part of the subscriber's entire credential being required for retrieving the location data. In this case, it is sufficient that the subscriber releases only the part required for retrieving the location data to the use of the service provider, unless the service provider needs to use other parts of the subscriber's credential.

In a preferred embodiment of the invention, the subscriber releases his credential to a service provider. When the subscriber wants to have access to chargeable contents, i.e. a service, provided by the service provider, the subscriber's credential is transferred to the content provider from the service provider. In this case, the content provider does not have to have access to data enabling the identification of the subscriber, it is sufficient for the content provider to receive the subscriber's credential and information about the content the subscriber requires. In other words, the content provider is able to retrieve the location of a subscriber who remains anonymous, and provide the subscriber with location-based contents. This embodiment is advantageous in that it enables the subscriber to access a location-based content provided by several content providers without the content providers finding out whom they are providing with the content. In other words, the content providers know where the client is located but are unaware of the identity of the client.

In a second preferred embodiment of the invention, the subscriber has notified a service provider of a client profile including data illustrative of the subscriber. The data may indicate for instance that the subscriber owns shares, that the subscriber is interested in international financial news, and that the subscriber is fond of fish dishes. When the subscriber subsequently requires chargeable services from a given service provider, a modified profile is generated from the subscriber's client profile and it is released to the use of the content provider. In this case, only the data necessary for the content provider to provide the subscriber with the right content are included in the modified profile. As regards a client profile as described above, for instance for a provider of contents relating to restaurants, the modified profile only has to include information stating that the subscriber is fond of fish dishes. The content provider uses this information to provide a content indicating, for example, the addresses of fish restaurants located near the subscriber. In this embodiment, the content provider may have access to information required for identifying the client, i.e. the content provider knows who the subscriber is. However, this is not necessary; in accordance with this embodiment, the subscriber may also appear to the content provider using a pseudonym, and the content provider provides the subscriber appearing with a pseudonym with content without knowing who the subscriber is. This preferred embodiment of the invention provides the advantage that an individual content provider is not provided with unnecessary information on a given subscriber.

The preferred embodiments of the method and telecommunication system of the invention are described in the attached dependent claims 2 to 5 and 7 to 9.

### BRIEF DESCRIPTION OF THE FIGURES

In the following, the invention will be described in detail by way of example with reference to the accompanying drawings, in which
Figure 1 illustrates a first preferred embodiment of the invention,
Figure 2 illustrates a second preferred embodiment of the invention, and
Figure 3 is a flow chart of the first preferred embodiment of the invention.

### DESCRIPTION OF THE PREFERRED EMBODIMENTS

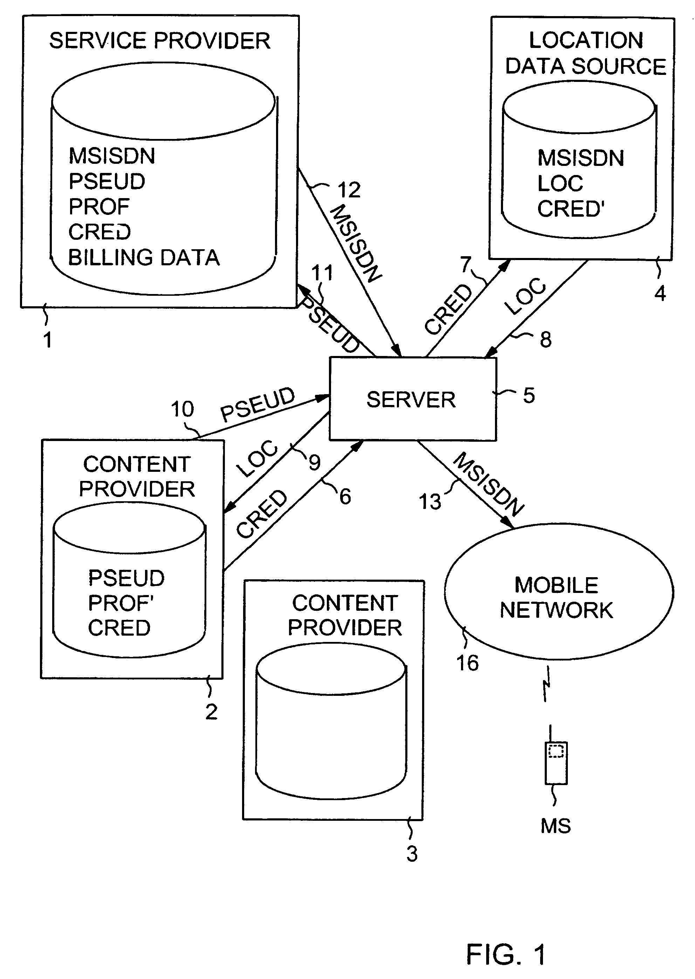

Figure 1 illustrates a first preferred embodiment of the invention by way of example. The embodiment of Figure 1 is suited to be utilized in providing a subscriber in a mobile system with chargeable location-based services, for example. Figure 1 shows the situation for one subscriber, i.e. only those system parts and data that are required for providing said subscriber with services are shown in Figure 1.

In the case of Figure 1, a subscriber MS is registered in advance at a service provider 1. Upon registration the following are stored in the database of the service provider for said subscriber:
- subscriber identifier MSISDN,
- pseudonym PSEUD; a subscriber-specific identifier that is known only to the service provider and the subscriber,
- the subscriber's client profile PROF, and
- credential CRED for finding out the subscriber's location. These data indicate the location data source, from where the service provider is able to find out the subscriber's location data. The credential also includes the necessary password, a secret key or the like, by means of which the service provider is able to indicate to said location data source that he is entitled to receive information on the subscriber's location. The credential may also include information on the validity period of a given subscription, for example.

In the case of Figure 1, the service provider's database also includes the subscriber's billing data, based on which the subscriber is billed for the services used. In the case of Figure 1, the assumption is that subscriber MS has subscribed to a given service, i.e. content, for a given time or for the time being, which is repeatedly delivered to him, and the client is billed for a given constant sum monthly, for example. In other words, a subscription service is involved.

Figure 1 shows two content providers 2 and 3, both of which provide the clients of a service provider 1 with content. In the case of Figure 1, the assumption is that subscriber MS has subscribed to a service provided by content provider 2. Said service may be composed of for instance a weather report that covers the geographical area where subscriber MS is located and that is transmitted by the system automatically to the subscriber every time the weather report is updated. For this purpose, the subscriber's MS pseudonym PSEUD and the subscriber's modified profile PROF' are stored in the content provider's 2 database. In other words, the content provider does not know who the client is; he only knows the pseudonym of the subscriber who is the client. The modified profile PROF' includes the data on the subscriber that the content provider has to know in order to be able to provide subscriber MS with the correct content. The modified subscriber profile also includes the subscriber's credential CRED.

The data stored in the content provider's 2 database are achieved for example in such a manner that the service provider 1 transmits a message to the content provider and includes therein the client's pseudonym PSEUD and selected parts of the subscriber's client profile PROF'. The content provider does not have to know who the client is or what the client's complete client profile PROF (known to the service provider) is, but to ensure the client's privacy, he has access to relevant data only. In the exemplary case, the client profile PROF' may include only the credential CRED and for instance a statement that the client wants a new version of the weather report covering the place where he is located.

When the content provider 2 has a new version of the weather report available, the content provider's 2 computer system searches through the client profiles in the content provider's 2 database. When doing this, the content provider's computer system detects that the newest weather report should be delivered to the subscriber whose pseudonym is PSEUD. Additionally, the profile PROF' indicates that the weather report has to be tailored taking into account the subscriber's location. Since the content provider is not aware of the subscriber's location, the content provider's computer system transmits a message 6 to a server 5. The message 6 includes the subscriber's credential CRED and a request for the subscriber's location data.

The server 5, i.e. a pseudonym server, may be a server managed and maintained by the service provider 1. Alternatively, the server 5 may be managed and maintained by some other party. In any case, the server involved communicates with several content providers. Accordingly, the service provider's clients may obtain chargeable service from several content providers without having to make contracts with several content providers. In addition, the identity or other contact data of the subscriber receiving the services do not have to be revealed to the content providers, but the content providers are able to provide location-based content for a subscriber using a pseudonym.

The credential CRED indicates to the server 5 the source from which the server 5 is able to find out the subscriber's location data. The credential also includes the necessary password, secret key or the like, by means of which the location data source is able to verify that it is allowable to transmit the subscriber's location data. In the case of Figure 1, the assumption is that the credential indicates that the location data are found in the database of the location data source 4, where the server 5 transmits a location data inquiry 7 including the subscriber's credential to obtain the location data.

The location data source 4 may be a commercial server that is maintained by an operator in the mobile system or another external party and from whose database the location data of given subscribers can be retrieved. A prerequisite for the retrieval of the location data is for instance that the subscriber has made a contract agreeing to the release of the location data in situations when the party inquiring about the location data has access to his credential. The subscriber location data in the location data source 4 can be updated for instance automatically by the action of the mobile network such that always when the subscriber moves from one location to another, the mobile network transmits the newest location data to the location data source 4. There are several alternative solutions as to how the subscriber location data can be found out. An alternative is for the network base stations to find out the subscriber's location based on signals originating from the subscriber. Alternatively, the subscriber's mobile station may comprise a GPS receiver (Global Positioning System) allowing the mobile station to determine its position and notify the network of its position at determined intervals. Still another alternative is for the subscriber to inform a given location for instance via his mobile station to the location data source, and the location data source transmits it further in connection with location data inquiries. This alternative provides the advantage that if a subscriber is for instance about to enter an airplane, he is able to notify the destination of the flight as his location to the location data source before turning off his mobile station. In this way, the subscriber can endure that while he is sitting in the plane, no contact provider provides content based on the place of departure of the flight, instead, when the subscriber turns on his mobile station at the destination, he is sure from the start to receive content tailored for said location.

Accordingly, for subscriber MS, at least subscriber identifier MSISDN, subscriber location data LOC and verification data CRED' enabling the verification of the credential CRED included in a location data inquiry 7 are stored in the location data source 4. If the result of the verification indicates that the server has the right to the subscriber's MS location data, the location data LOC are transferred from the location data source to the server 5 in a reply message 8. The server 5 relays the location data LOC to the content provider 2 in a message 9. Consequently, the content provider 2 is informed of the newest location data LOC of the pseudonym client PSEUD.

Based on the location data LOC, the content provider 2 is able to provide the client with the content he subscribed to, i.e. in this case a weather report. The content provider sends the content subscribed to by the client to the server 5 in a message 10. The pseudonym PSEUD, included in the message 10, enables the server 5 to make an inquiry 11 to the service provider's 1 database to obtain a reply message 12 indicating the subscriber identifier MSISDN of said pseudonym client. The server 5 then transmits the content in a message 13 to a mobile network 16 for further delivery to the subscriber MS corresponding to the subscriber identifier MSISDN.

As the above description indicates, the content provider 2 is able to provide his clients with location-based content without knowing who the client is. Although the different content provides 2 and 3 have knowledge of different parts of the same client's profile PROF, the content providers cannot, even by combining their knowledge, find out additional information about the client. The reason for this is that the content providers do not know the client nor do they know which pseudonym client's data they should combine (the same client may have different pseudonyms in use at different content providers). The service provider 1 may know the identity of a client using a given pseudonym and the content provider from which the client ordered the content, but the service provider does not know what said content is. The administrator of the location data source 4 knows where a given subscriber MS is located and when said subscriber's location data were retrieved from the location data source, but the location data source administrator does not know the purpose for which the location data was retrieved. The party who needs the location data, i.e. the content provider, is not either known to the location data source administrator. The operator of the mobile network knows that a given subscriber receives a message from a service provider, but the contents of the message are not known to the operator of the mobile network. Accordingly, the subscriber's MS privacy is well protected, since he is able to use location-based services without any party participating in the production or transfer of the services being able to collect data on his habits.

In the subscription-based embodiment of Figure 1, the subscriber MS can be billed for the services he uses by a constant monthly amount. That is, when the client has made a subscription to get access to a content provided by the content provider 2, an entry is made in the service provider's 1 database, according to which the subscriber will be billed a constant amount monthly for said subscription. The type of service or content does not have to be registered. Similarly, the service provider will compensate the content provider for a given amount monthly. The content provider does not have to know who the client is even for the billing nor does the service provider have to know what the content provided by the content provider is.

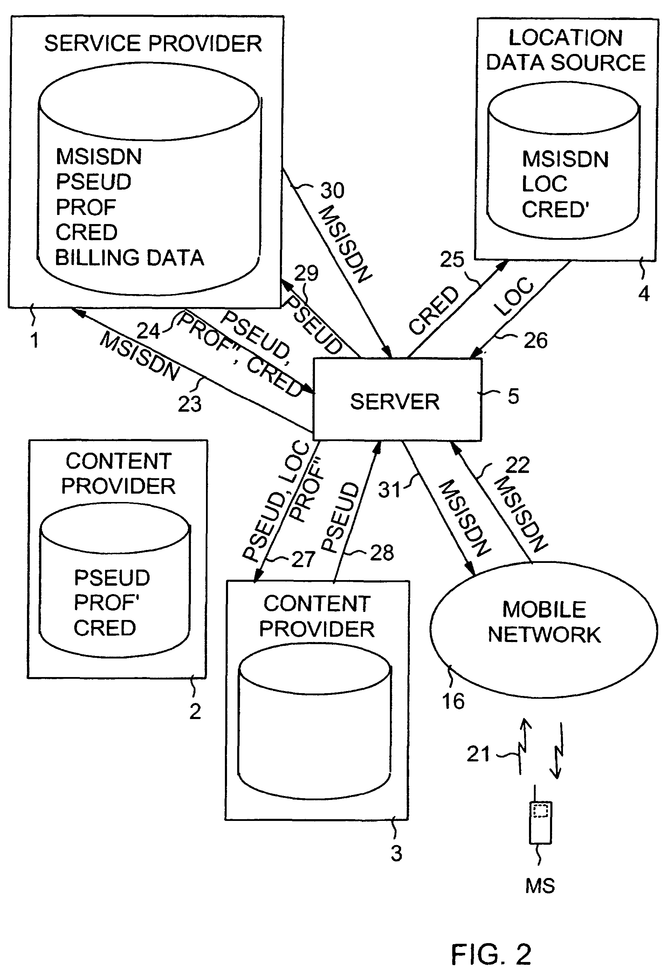

Figure 2 illustrates by way of example a second preferred embodiment of the invention. Figure 2 shows the elements corresponding to those in the case of Figure 1, and in this embodiment, too, the subscriber MS is registered in advance at the service provider 1 with the same data as in the case of Figure 1. Figure 2 shows an example of a case where transaction-based billing is used.

In the case of Figure 2, subscriber MS decides to subscribe to a chargeable service via his mobile station. By way of example, it may be assumed that the subscriber is in a strange place and wants to find out the nearest luncheonettes. The subscriber then uses his mobile station MS to transmit a message 21 to a service provider's number requesting for said information. The subscriber's request is relayed by the mobile network 16 to the server 5, which makes an inquiry to the service provider 1 by a message 23.

The subscriber identifier MSISDN included in the message 23 allows the service provider 1 to identify subscriber MS, and to retrieve the subscriber's client profile PROF, pseudonym PSEUD and credential CRED from its database. The credential may be part of the client profile, in which case it need not be separately retrieved. The message 23 preferably contains data based on which the service provider is able to conclude that part of the client profile which is needed to provide the service subscribed to by the subscriber. The service provider uses this part of the client profile to provide a modified profile containing only the data the content provider needs to provide subscriber MS with the right content. If the assumption is, for example, that the subscriber's MS profile PROF indicates that the subscriber is fond of fish dishes in particular, and that the subscriber always wants a new weather report for his location when such a report is available, the latter information is naturally useless as far as information about restaurants is concerned. Consequently, in the case of Figure 2, a modified profile PROF", provided by the service provider, indicates that the subscriber is fond of fish dishes in particular. The modified profile PROF" also contains the subscriber's credential CRED. The service provider 1 then transmits the subscriber's pseudonym PSEUD and the modified profile PROF" to the sever 5 in a message 24.

In order to find out the subscriber's MS location data, the server 5 transmits a location data inquiry 25 to the location data source. Since the location data inquiry 25 includes the subscriber's MS credential CRED, the location data source 4 replies the inquiry by a message 26 including the subscriber's MS latest location data LOC.

Having received the location data, the server transmits a message 27 to the content provider 3 providing content concerning restaurants. The message 27 includes the subscriber's pseudonym PSEUD, location data LOC and the modified profile PROF". Accordingly, based on the modified profile PROF" and the location data LOC, the content provider 3 is able to provide a content listing the fish restaurants located in the vicinity of subscriber MS.

The content provider 3 uses a message 28 to transmit the content subscribed to by the client to the server 5. The pseudonym PSEUD included in the message 28 enables the server 5 to make an inquiry 29 to the service provider's 1 database for a reply message 30 indicating said pseudonym client's subscriber identifier MSISDN. The server 5 then transmits the content in a message 31 to the mobile network 16 for further delivery to the subscriber MS corresponding to the subscriber identifier MSISDN. If the server has maintained in its memory the subscriber identifier of the client using the pseudonym PSEUD, messages 29 and 30 are not needed to find out the subscriber identifier.

In the case of Figure 2, the client may be billed such that the content provider 3 adds the price of the service to the message 28 transmitted to the server 5, and the server 5 then uses the message 29 to transmit to the service provider 1 information stating that the price given is to be entered in the billing data of said pseudonym client, and that the content provider 3, in turn, has to be compensated for the agreed sum. At its simplest, it is sufficient to enter the price in the billing data that the service provider later debits from the subscriber and the sum that the service provider credits to the content provider 3. The type of service or content does not have to be registered. However, if a more detailed specification is required in the bill to be sent to the subscriber, the data on the content provider 3 may also be entered in the billing data. The content provider 3 does not have to know who the client is even for the billing nor does the service provider have to know what the content provided by the content provider is.

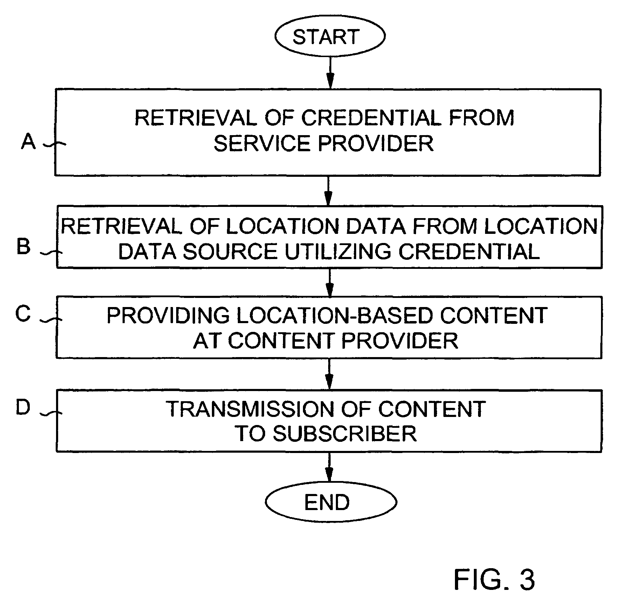

Figure 3 is a flow diagram of a first preferred embodiment of the method of the invention. The method of Figure 3 can be utilized in systems of the kind shown in Figures 1 and 2.

In block A, a message is received from a subscriber, stating that the subscriber requests location-based content. Said subscriber's credential is then retrieved from the service provider.

In block B, the location data is retrieved from the location data source by utilizing the subscriber's credential.

If a transaction service is concerned, i.e. providing a subscriber with single-time content, the location data inquiry can be made to the location data source by utilizing the credential practically immediately after the credential is retrieved from the service provider. The location data retrieved from the location data source is then delivered to the content provider together with the subscriber's modified client profile, whereby the client profile indicates the content the subscriber subscribed to. Accordingly, the content provider obtains in one go all necessary information in order to be able to provide the content.

If, on contrast, a subscription service is concerned, i.e. providing content to the subscriber later, for example when given parameters are fulfilled (such as at a given time of day or in future always when a new piece of information, e.g. a new weather report is available), then the subscriber's credential and the modified client profile can be at first delivered to the content provider. The content provider can then utilize the credential to retrieve the subscriber's location data from the location data source, when necessary.

In block C, the location-based content requested by the subscriber is provided at the content provider.

In block D, the content provided is transmitted to the subscriber. If the subscriber has appeared with a pseudonym to the content provider, i.e. the content provider does not know to whom the content should be delivered, then the content provider may transmit the content, together with the known pseudonym, to a server that is able to find out the identifier of the subscriber using said pseudonym, or contact information, i.e. information based on which the content can be sent to the subscriber. Said server then transmits the content to the right subscriber. Such a server, in which the subscriber identifier or contact data can be found out, can be a server maintained by a service provider or some other party.

It is to be understood that the above specification and the related figures are only intended to illustrate the present invention. Different variations and modifications of the invention are apparent to those skilled in the art, without deviating from the scope of the invention disclosed in the attached claims.

## Claims

1. A method of providing a subscriber (MS) with content that is dependent on the subscriber's location data (LOC), **characterized by**
retrieving (A) a subscriber credential (CRED) from a service provider (1) for enabling the retrieval of the subscriber's location data from a location data source (4),
retrieving (B) the subscriber's location data (LOC) from the location data source (4) by utilizing the credential (CRED),
producing (C) a location-based content at a content provider (2) by utilizing the location data (LOC), and
transmitting (D) the content to the subscriber (MS) via a telecommunication system.

2. A method as claimed in claim 1, **characterized by**
retrieving the subscriber's client profile (PROF), in addition to the credential (CRED), from the service provider (1 ),
modifying the subscriber's client profile (PROF) to create a modified profile (PROF') suitable for the content provider's (2) needs, and
transmitting the modified subscriber profile (PROF') to the content provider (2).

3. A method as claimed in claim 2, **characterized by**
transmitting a subscriber pseudonym (PSEUD) instead of data enabling identification to the content provider (2),
retrieving data required for identifying the client using the pseudonym (PSEUD) from a database (1) for transmitting the content produced by the content provider (2) to the subscriber (MS) using the pseudonym (PSEUD), and
forwarding the content provided by the content provider (2) to the identified subscriber (MS).

4. A method as claimed in any one of claims 1 to 3, **characterized by**
forwarding price information, transmitted by the content provider (2) along with the content, to the service provider (1 ),
billing the subscriber (MS) based on the data stored in the service provider's database (1), and compensating the content provider (2) based on the data stored in the service provider's (1) database.

5. A method as claimed in any one of claims 1 to 3, **characterized by**
entering information about the services subscribed to by the subscriber (MS) in the service provider's (1) database,
billing the subscriber (MS) for a constant sum at given intervals for the services subscribed to by the subscriber (MS), and
compensating the content provider (2) for a sum agreed for providing the content subscribed to by the subscriber (MS).

6. A telecommunication system comprising:
subscribers (MS),
a location data source (4) for maintaining location data descriptive of the subscribers' location, and
a service provider (2, 3) for providing the subscribers with subscriber location data-dependent content, **characterized in**
**that** the location data source (4) is configured to transmit further a given subscriber's location data only upon reception of a location data inquiry including a credential which is verified to be correct, and
**that** the system further includes:
a service provider (1), from which a given subscriber's credential is retrievable for providing said subscriber (MS) with a location-based content, and
means (5) for transmitting a location data inquiry including the credential of the subscriber requesting for the content to the location data source (4), for transferring the location data transmitted from the location data source (4) to the content provider (2, 3), and for transferring the content provided by the content provider (2, 3) further to the subscriber.

7. A telecommunication system as claimed in claim 6, **characterized in**
**that** the service provider (1) is configured to maintain data on the pseudonyms of the subscribers requesting for content, and
**that** said means (5) are configured to use the pseudonym retrieved from the service provider instead of the subscriber identifier when communicating with the content provider (2, 3), so that the content provider does not gain access to the data required for identifying the subscriber.

8. A telecommunication system as claimed in claim 6 or 7, **characterized in**
**that** the service provider (1) also is configured to maintain data on each subscriber's client profile, and
**that** the system includes means for generating a modified profile suited to the needs of a given content provider (2, 3) from said client profile, said modified profile only including those parts of the original client profile that are necessary for providing services, and means for transmitting said modified profile to the content providers.

9. A telecommunication system as claimed in claim 8, **characterized in that** said modified profile includes said subscriber's credential.

10. A location data source (4) including means for maintaining and forwarding subscriber location data, **characterized in that** the location data source (4) is configured to transmit further a given subscriber's (MS) location data only when the location data source has received a location data inquiry including a credential which is verified to be correct.

## Patentansprüche

1. Verfahren zur Versorgung eines Teilnehmers (MS) mit Inhalt, der von den Standortsdaten (LOC) des Teilnehmers abhängt, **gekennzeichnet durch**
Wiedergewinnen (A) eines Teilnehmerberechtigungsnachweises (CRED) von einem Diensteanbieter (1), um die Wiedergewinnung der Standortsdaten des Teilnehmers von einer Standortsdatenquelle (4) freizugeben,
Wiedergewinnen (B) der Standortsdaten (LOC) des Teilnehmers von der Standortsdatenquelle (4), indem der Berechtigungsnachweis (CRED) verwendet wird,
Erzeugen (C) eines ortsbezogenen Inhalts bei einem Inhaltanbieter (2), indem die Standortsdaten (LOC) verwendet werden, und
Übertragen (D) des Inhalts über ein Telekommunikationssystem zum Teilnehmer (MS).

2. Verfahren nach Anspruch 1, **gekennzeichnet durch**
Wiedergewinnen des Kundenprofils (PROF) des Teilnehmers vom Diensteanbieter (1) zusätzlich zum Berechtigungsnachweis (CRED),
Modifizieren des Kundenprofils (PROF) des Teilnehmers, um ein modifiziertes Profil (PROF') zu erzeugen, das den Erfordernissen des Inhaltanbieters (2) entspricht, und
Übertragen des modifizierten Teilnehmerprofils (PROF') zum Inhaltanbieter (2).

3. Verfahren nach Anspruch 2, **gekennzeichnet durch**
Übertragen eines Teilnehmerpseudonyms (PSEUD) statt einer Datenfreigabeidentifizierung zum Inhaltanbieter (2),
Wiedergewinnen von zur Identifizierung des Kunden erforderlichen Daten unter Verwendung des Pseudonyms (PSEUD) aus einer Datenbank (1), um den vom Inhaltanbieter (2) erzeugten Inhalt unter Verwendung des Pseudonyms (PSEUD) zum Teilnehmer (MS) zu übertragen, und
Weiterleiten des vom Inhaltanbieter (2) bereitgestellten Inhalts zum identifizierten Teilnehmer (MS).

4. Verfahren nach einem der Ansprüche 1 bis 3, **gekennzeichnet durch**
Weiterleiten von Preisinformation zum Diensteanbieter (1), die zusammen mit dem Inhalt vom Inhaltanbieter (2) übertragen wird,
Erstellen einer Rechnung des Teilnehmers (MS) auf Grundlage der Daten, die in der Datenbank des Diensteanbieters (1) gespeichert sind, und
Zahlen einer Vergütung an den Inhaltanbieter (2) auf Grundlage der in der Datenbank des Diensteanbieters (1) gespeicherten Daten.

5. Verfahren nach einem der Ansprüche 1 bis 3, **gekennzeichnet durch**
Eingeben von Information über die vom Teilnehmer (MS) abonnierten Dienste in die Datenbank des Diensteanbieters (1),
Erstellen einer Rechnung des Teilnehmers (MS) über einen konstanten Betrag in vorgegebenen Intervallen für die vom Teilnehmer (MS) abonnierten Dienste, und
Zahlen einer Vergütung an den Inhaltanbieter (2) über einen Betrag, der zur Bereitstellung des vom Teilnehmer (MS) abonnierten Inhalts vereinbart wurde.

6. Telekommunikationssystem, umfassend:
Teilnehmer (MS),
eine Standortsdatenquelle (4), um Standortsdaten, die für den Standort des Teilnehmers deskriptiv sind, auf aktuellem Stand zu halten, und
einen Diensteanbieter (2, 3), um die Teilnehmer mit Teilnehmerstandortsdaten-abhängigem Inhalt zu versorgen, **dadurch gekennzeichnet,**
**dass** die Standortsdatenquelle (4) konfiguriert ist, um weiter vorgegebene Standortsdaten des Teilnehmers nur nach Empfang einer Standortsdatenabfrage einschließlich eines Berechtigungsnachweises, der als einwandfrei verifiziert ist, zu übertragen, und
**dass** das System weiter umfasst:
einen Diensteanbieter (1), von dem ein vorgegebener Berechtigungsnachweis des Teilnehmers wiedergewinnbar ist, um den Teilnehmer (MS) mit einem ortsbezogenen Inhalt zu versorgen, und
Einrichtungen (5) zur Übertragung einer Standortsdatenabfrage einschließlich des Berechtigungsnachweises des Teilnehmers, der den Inhalt zur Standortsdatenquelle (4)anfordert, zur Übertragung der von der Standortsdatenquelle (4) übertragenen Standortsdaten zum Inhaltanbieter (2, 3) und zur Übertragung des vom Inhaltanbieter (2, 3) bereitgestellten Inhalts weiter zum Teilnehmer.

7. Telekommunikationssystem nach Anspruch 6, **dadurch gekennzeichnet,**
**dass** der Diensteanbieter (1) konfiguriert ist, um Daten über die Pseudonyme der Teilnehmer, die einen Inhalt anfordern, auf aktuellem Stand zu halten, und
**dass** die Einrichtungen (5) konfiguriert sind, um das vom Diensteanbieter wiedergewonnene Pseudonym statt der Teilnehmeridentifizierung zu verwenden, wenn mit dem Inhaltanbieter (2, 3) kommuniziert wird, so dass der Inhaltanbieter keinen Zugriff auf die Daten erhält, die zur Identifizierung des Teilnehmers erforderlich sind.

8. Telekommunikationssystem nach Anspruch 6 oder 7, **dadurch gekennzeichnet,**
**dass** der Diensteanbieter (1) auch Daten über ein Kundenprofil jedes Teilnehmers auf aktuellem Stand hält, und
**dass** das System umfasst: Einrichtungen zur Erzeugung eines den Erfordernissen eines vorgegebenen Inhaltanbieters (2, 3) entsprechenden modifizierten Profils von dem Kundenprofil, wobei das modifizierte Profil nur diejenigen Teile des ursprünglichen Kundenprofils enthält, die zur Bereitstellung von Diensten notwendig sind, und Einrichtungen zur Übertragung des modifizierten Profils zum Inhaltanbieter.

9. Telekommunikationssystem nach Anspruch 8, **dadurch gekennzeichnet, dass** das modifizierte Profil den Berechtigungsnachweis des Teilnehmers umfasst.

10. Standortsdatenquelle (4), umfassend Einrichtungen, um Teilnehmerstandortsdaten auf aktuellem Stand zu halten und weiterzuleiten, **dadurch gekennzeichnet, dass** die Standortsdatenquelle (4) konfiguriert ist, um weiter vorgegebene Standortsdaten des Teilnehmers (MS) nur zu übertragen, wenn die Standortsdatenquelle eine Standortsdatenabfrage einschließlich eines Berechtigungsnachweises, der als einwandfrei verifiziert ist, empfangen hat.

## Revendications

1. Procédé de fourniture à un abonné (MS), d'un contenu qui dépend de données de localisation de l'abonné (LOC), **caractérisé par** la récupération (A) d'un identifiant d'abonné (CRED) auprès d'un fournisseur de services (1) pour permettre la récupération des données de localisation de l'abonné auprès d'une source de données de localisation (4),
la récupération (B) des données de localisation de l'abonné (LOC) auprès de la source de données de localisation (4) en utilisant l'identifiant (CRED),
la production (C) au niveau d'un fournisseur de contenu (2) d'un contenu basé sur la localisation en utilisant les données de localisation (LOC), et
la transmission (D) du contenu à l'abonné (MS) par un système de télécommunication.

2. Procédé selon la revendication 1, **caractérisé par**
la récupération d'un profil client de l'abonné (PROF), en plus de l'identifiant (CRED), auprès du fournisseur de services (1),
la modification du profil client de l'abonné (PROF) afin de créer un profil modifié (PROF') adapté aux besoins du fournisseur de contenu (2), et
la transmission du profil d'abonné modifié (PROF') au fournisseur de contenu (2).

3. Procédé selon la revendication 2, **caractérisé par**
la transmission, d'un pseudonyme d'abonné (PSEUD) au lieu de données permettant l'identification au fournisseur de contenu (2)
la récupération de données requises pour l'identification du client en utilisant le pseudonyme (PSEUD) auprès d'une base de données (1) pour transmettre le contenu produit par le fournisseur de contenu (2) à l'abonné (MS) en utilisant le pseudonyme (PSEUD), et
l'envoi du contenu fourni par le fournisseur de contenu (2) à l'abonné identifié (MS).

4. Procédé selon l'une quelconque des revendications 1 à 3, **caractérisé par** l'envoi, d'une information de prix, transmise par le fournisseur de contenu (2) parallèlement au contenu, au fournisseur de services (1),
la facturation de l'abonné (MS) d'après les données stockées dans la base de données du fournisseur de services (1), et
l'indemnisation du fournisseur de contenu (2) d'après les données stockées dans la base de données du fournisseur de services (1).

5. Procédé selon l'une quelconque des revendications 1 à 3, **caractérisé par** l'introduction d'une information au sujet des services souscrits par l'abonné (MS) dans la base de données du fournisseur de services (1),
de la facturation de l'abonné (MS) pour une somme constante à des intervalles donnés pour les services souscrits par l'abonné (MS),
l'indemnisation du fournisseur de contenu (2) pour une somme convenue pour fournir le contenu souscrit par l'abonné (MS)

6. Système de télécommunication comprenant :
des abonnés (MS),
une source de données de localisation (4) pour conserver des données de localisation représentant la localisation des abonnés, et
un fournisseur de services (2, 3) pour fournir aux abonnés un contenu en relation avec les données de localisation d'abonné, **caractérisé**
**en ce que** la source de données de localisation (4) est configurée pour transmettre de plus des données de localisation d'un l'abonné particulier uniquement à la réception d'une demande de renseignements sur des données de localisation comprenant un identifiant qui est vérifié comme étant correct, et
**en ce que** le système comprend de plus :
un fournisseur de services (1), auprès duquel on peut récupérer un identifiant de l'abonné particulier pour fournir audit abonné (MS) un contenu basé sur la localisation, et
des moyens (5) pour transmettre une demande de renseignements sur les données de localisation comprenant l'identifiant de l'abonné demandant le contenu à la source de données de localisation (4), pour transférer les données de localisation transmises de la source de données de localisation (4) au fournisseur de contenu (2, 3), et pour transférer le contenu fourni par le fournisseur de contenu (2, 3) en
outre à l'abonné.

7. Système de télécommunication selon la revendication 6, **caractérisé en ce que** le fournisseur de services (1) est configuré pour conserver des données sur les pseudonymes des abonnés demandant un contenu, et
**en ce que** lesdits moyens (5) sont configurés pour utiliser le pseudonyme récupéré auprès du fournisseur de services au lieu de l'identificateur d'abonné lorsqu'il y a communication avec le fournisseur de contenu (2, 3), afin que le fournisseur de contenu ne réussisse pas à accéder aux données requises pour identifier l'abonné.

8. Système de télécommunication selon la revendication 6 ou 7, **caractérisé en ce que** le fournisseur de services (1) est également configuré pour conserver des données sur le profil client de chaque abonné, et
**en ce que** le système comprend des moyens pour produire un profil modifié adapté aux nécessités d'un fournisseur de contenu donné( 2 , 3) d'après ledit profil client, ledit profil modifié ne comprenant que des parties du profil client d'origine qui sont nécessaires à la fourniture de services, et des moyens pour transmettre ledit profil modifié au fournisseur de contenu.

9. Système de télécommunication selon la revendication 8, **caractérisé en ce que** ledit profil modifié comprend l'identifiant dudit abonné.

10. Source de données de localisation (4) comprenant des moyens pour conserver et envoyer des données de localisation d'abonné, **caractérisé en ce que** la source de données de localisation (4) est configurée afin de transmettre en plus des données de localisation d'un abonné particulier (MS) seulement lorsque la source de données de localisation a reçu une demande de renseignements sur les données de localisation comprenant un identifiant qui est vérifié comme étant correct.
